# EUROPEAN PATENT APPLICATION

(11) **EP 4 629 131 A1**
(43) Date of publication of application: **08.10.2025**
(21) Application number: 25160035.9
(22) Date of filing: 25.02.2025
(51) Int. Cl.: G06F 40/30

(54) **METHODS, APPARATUSES AND COMPUTER PROGRAM PRODUCTS FOR AUTOMATICALLY PROVIDING FORMAT CONTENT SUGGESTIONS ASSOCIATED WITH CONTENT INPUT TO ENTITIES**

(30) Priority: 03.04.2024 US 202418626189
(71) Applicant: Meta Platforms, Inc., Menlo Park, CA 94025 (US)
(72) Inventor: LI, Ziliu, Menlo Park, 94025 (US)
(74) Representative: Murgitroyd & Company

(57) **Abstract**

A system and method for providing recommended or suggested format(s) of content are provided. The system may analyze one or more items of content associated with a user being input or captured by a user interface. The system may also implement a machine learning model including training data pre-trained, or trained in real-time, on one or more content items having one or more content formats. The system may also automatically determine at least one suggested content format applied to the one or more items of content responsive to determining that at least a subset of the one or more items of content are similar to corresponding content items of a same or similar type associated with, or within, the training data. The system may also present, by a user interface or a display device, the at least one suggested content format applied to the one or more items of content.

## Description

### TECHNICAL FIELD

This disclosure relates generally to methods, apparatuses and computer program products for providing composers and other entities that automatically suggest suitable content formats associated with input content associated with one or more users.

### BACKGROUND

Many composer tools may be the main entry point that a creator/producer may utilize to create content in applications (apps) associated with a system/network. However, due to the nature of some existing composers, for example some composers utilized with mobile devices that may have limited input window sizes for receipt of typed content thus causing difficulty in typing content, it may be challenging to create a well formatted post of content within these composers. For instance, the creator's content may directly impact the entire system causing the system to have a negative feedback loop by potentially discouraging creation of content based on, for example, providing less/low quality content, less engagement/consumption (e.g., by creators/users associated with an app(s)), a less active system (e.g., based on fewer than desired user interaction), which may result in discouraging creation by creators/users associated with the system.

In some existing composers, a creator/user may have to manually adjust the format (e.g., header tags (e.g., a HyperText Markup Language (HTML) h1 header tag, a HTML h2 header tag, etc.), a bold font, an italicized font, a bulleted list, an indent, an outdent, etc.) of content while creating content of a post, which may be time consuming and cumbersome to creators/users and may undesirably impact creative content being written/typed and posted by an app. This may discourage creators/users to create good formatted content.

As such, it may be beneficial to provide an efficient and reliable mechanism to enable composers to automatically suggest formats of content being created by users to enhance the content creation experience of users.

### SUMMARY

Some examples of the present disclosure may provide composers and/or composer tools that may overcome the drawbacks described above and may cause/help users to focus on content innovation/creation by enabling composers to automatically suggest formats of content being created by users, which may enhance the content creation experience of the users.

By utilizing the composers of the present disclosure, users may be able to focus more on the typing/writing, or other input, of content in a composer to express their ideas and/or information, and may not need to explicitly modify or adjust items of the content into one or more different formats.

In some examples, the machine learning formatting model of the aspects of the present disclosure may capture the raw content input by a user input to a composer and may output formatted content associated with the raw content input by the user. In some examples, the machine learning formatting model may enable output of changes to the formatted content (e.g., in an instance in which a user makes a selection for different formatted content within a user interface associated with a composer). In some examples, the machine learning formatting model may be applied/implemented by a composer(s) of the exemplary aspects of the present disclosure to enable the composer(s) to operate/function, for example, as a formatting suggestion assistant. The formatting suggestion assistant may format the content provided by the composer(s) in real-time while a user is typing/writing or otherwise (e.g., spoken) inputting the content into the composer or the formatting suggestion assistant may provide the formatting suggestion in response to or after the typing/writing or other input of the content within the composer is complete.

In an instance in which, the user has completed the typing/writing or other input (e.g., spoken input (e.g., voice data)) of content to the composer and is satisfied with the formatting of the content (e.g., automatically) suggested by the formatting suggestion assistant, the user may make a selection (e.g., a selection or a click of a button, an icon or the like) within a user interface of the composer to select a final version of the formatted content to publish (e.g., a post of the formatted content by an app(s)).

Additionally, in some examples the formatting suggestion assistant may determine the type/topic associated with the content input by a user into a composer to automatically suggest the suitable format for the content. Further, the formatting suggestion assistant may enable presentation of a visualization preview result of the automatically (auto) suggested content by the formatting suggestion assistant and may (e.g., automatically and/or in response to a user selection) provide content format adjustments to the auto suggested content based on different scenarios. For instance, a user may make a selection within a user interface of a composer for a different type of auto suggested content format. Additionally or alternatively, after a predetermined time period expires, the formatting suggestion assistant may automatically present another/alternate (e.g., a second) different auto suggested content format, via the user interface or a display device, based on the content input by the user within the composer.

In some other examples, in addition to providing auto suggested content formatting associated with text input (e.g., plain text input) into a composer, the formatting suggestion assistant may also enable auto suggested content formatting on multimedia such as, for example, photos, videos, documents, etc. and may support auto suggested content formatting for all, or a subset, of the types of media that a composer of the exemplary aspects of the present disclosure may support.

According to a first aspect, there is provided a method comprising: analyzing one or more items of content associated with a user being input or captured by a user interface; implementing a machine learning model comprising training data pre-trained, or trained in real-time, on one or more content items comprising one or more content formats; automatically determining at least one suggested content format applied to the one or more items of content in response to determining that at least a subset of the one or more items of content are similar to corresponding content items of a same or similar type associated with, or within, the training data; and presenting, by a user interface or a display device, the at least one suggested content format applied to the one or more items of content.

The method may further comprise automatically determining, by the implementing the machine learning model, at least one alternate suggested content format applied to the one or more items of content in response to determining an expiration of a predetermined time period.

The method may further comprise determining, by the implementing the machine learning model, at least one alternate suggested content format applied to the one or more items of content in response to detecting an indication of a selection of an option associated with generating the alternate suggested content format.

The method may further comprise automatically presenting, by the user interface or the display device, the alternate suggested content format applied to the one or more items of content in response to the determining the at least one alternate suggested content format.

One or more items of content of the alternate suggested content format may be in a different content format in relation one or more items of content of the at least one suggested content. The one or items of content of the alternate suggested content format and the one more items of content of the at least one suggested content format may be applied to the one or more items of content associated with the user being input or captured.

The one or more items of content associated with the user being input or captured may comprise text comprising alphabetic characters and/or numeric characters.

The user interface may be associated with at least one composer entity or editor entity configured to receive or capture the input. The composer entity or the editor entity may be associated with at least one application.

The method may further comprise performing the presenting of the at least one suggested content format applied to the one or more items of content in real-time while the input is being received or captured by the user interface.

The method may further comprise performing the presenting of the at least one suggested content format applied to the one or more items of content in response to, or after, determination of completion of the input received or captured by the user interface.

The machine learning model may be trained with a dataset including content items and associated one or more content formats.

According to a second aspect, there is provided an apparatus comprising: one or more processors; and at least one memory storing instructions, that when executed by the one or more processors, cause the apparatus to carry out the method of the first aspect.

According to a third aspect, there is provided a computer-readable medium storing instructions that, when executed by a processor, cause the processor to carry out the method of the first aspect. The medium may be non-transitory.

According to a fourth aspect, there is provided a computer program product comprising instructions which, when the program is executed by a computer, cause the computer to carry out the method of the first aspect.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings examples of the disclosed subject matter; however, the disclosed subject matter is not limited to the specific methods, compositions, and devices disclosed. In addition, the drawings are not necessarily drawn to scale. In the drawings:
FIG. 1 is a diagram of an exemplary network environment in accordance with an example of the present disclosure.
FIG. 2 is a diagram of an exemplary communication device in accordance with an example of the present disclosure.
FIG. 3 is a diagram of an exemplary computing system in accordance with an example of the present disclosure.
FIG. 4 is a diagram illustrating a recommended or suggested format of content based on the same or similar content input, by or associated with a user, within a composer or editor tool in accordance with an example of the present disclosure.
FIG. 5 is another diagram illustrating another recommended or suggested format of content based on the same or similar content input, by or associated with a user, within a composer or editor tool in accordance with an example of the present disclosure.
FIG. 6 is a diagram illustrating another or alternate recommended or suggested format of content based on the same or similar content input, by or associated with a user, within a composer or editor tool in accordance with an example of the present disclosure.
FIG. 7 illustrates an example of a machine learning framework in accordance with one or more examples of the present disclosure.
FIG. 8 illustrates an example flowchart illustrating operations for providing recommended or suggested format(s) of content in accordance with an example of the present disclosure.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Some examples of the present invention will now be described more fully hereinafter with reference to the accompanying drawings, in which some, but not all examples of the invention are shown. Indeed, various examples of the invention may be embodied in many different forms and should not be construed as limited to the examples set forth herein. Like reference numerals refer to like elements throughout. As used herein, the terms "data," "content," "information" and similar terms may be used interchangeably to refer to data capable of being transmitted, received and/or stored in accordance with examples of the invention. Moreover, the term "exemplary", as used herein, is not provided to convey any qualitative assessment, but instead merely to convey an illustration of an example. Thus, use of any such terms should not be taken to limit the scope of examples of the invention.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented/Virtual/Mixed Reality.

As referred to herein, a composer, composer entity, editor, editor entity or editor tool may refer to a tool that may enable users to create, edit and/or organize content, such as for example text, alphanumeric characters, multimedia such as for example image content, audio content, video content and/or other digital content/media in which the tool may provide an intuitive and user-friendly user interface that may allow input, capture and/or describing of ideas or other thoughts, by users, within the user interface and enable sharing of such ideas/thoughts with other users.

It is to be understood that the methods and systems described herein are not limited to specific methods, specific components, or to particular implementations. It is also to be understood that the terminology used herein is for the purpose of describing particular examples only and is not intended to be limiting.

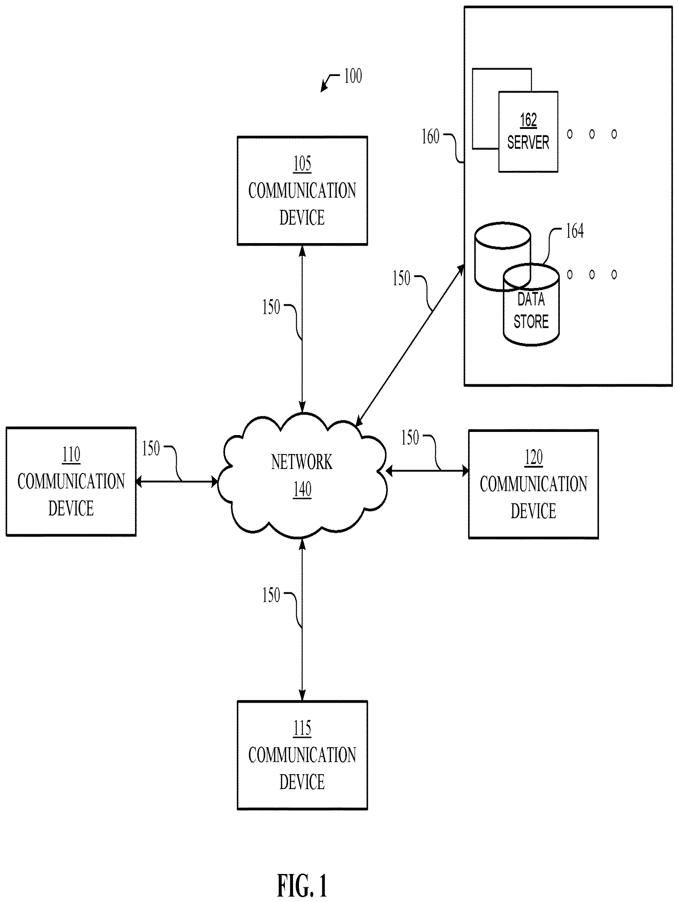

Reference is now made to FIG. 1, which is a block diagram of a system. As shown in FIG. 1, the system 100 may include one or more communication devices 105, 110, 115 and 120 and a network device 160. Additionally, the system 100 may include any suitable network such as, for example, network 140. In some examples, the network 140 may be a Metaverse network. In other examples, the network 140 may be any suitable network capable of provisioning content and/or facilitating communications among entities within, or associated with the network. As an example and not by way of limitation, one or more portions of network 140 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 140 may include one or more networks 140.

Links 150 may connect the communication devices 105, 110, 115 and 120 to network 140, network device 160 and/or to each other. This disclosure contemplates any suitable links 150. In some examples, one or more links 150 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some examples, one or more links 150 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout system 100. One or more first links 150 may differ in one or more respects from one or more second links 150.

In some examples, communication devices 105, 110, 115, 120 may be electronic devices including hardware, software, or embedded logic components or a combination of two or more such components and capable of carrying out the appropriate functionalities implemented or supported by the communication devices 105, 110, 115, 120. As an example, and not by way of limitation, the communication devices 105, 110, 115, 120 may be a computer system such as for example a desktop computer, notebook or laptop computer, netbook, a tablet computer (e.g., a smart tablet), e-book reader, Global Positioning System (GPS) device, camera, personal digital assistant (PDA), handheld electronic device, cellular telephone, smartphone, smart glasses, augmented/virtual reality device, smart watches, charging case, or any other suitable electronic device, or any suitable combination thereof. The communication devices 105, 110, 115, 120 may enable one or more users to access network 140. The communication devices 105, 110, 115, 120 may enable a user(s) to communicate with other users at other communication devices 105, 110, 115, 120.

Network device 160 may be accessed by the other components of system 100 either directly or via network 140. As an example and not by way of limitation, communication devices 105, 110, 115, 120 may access network device 160 using a web browser or a native application associated with network device 160 (e.g., a mobile social-networking application, a messaging application, another suitable application, or any combination thereof) either directly or via network 140. In particular examples, network device 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular examples, each server 162 may include hardware, software, or embedded logic components or a combination of two or more such components for carrying out the appropriate functionalities implemented and/or supported by server 162. In particular examples, network device 160 may include one or more data stores 164. Data stores 164 may be used to store various types of information. In particular examples, the information stored in data stores 164 may be organized according to specific data structures. In particular examples, each data store 164 may be a relational, columnar, correlation, or other suitable database. Although this disclosure describes or illustrates particular types of databases, this disclosure contemplates any suitable types of databases. Particular examples may provide interfaces that enable communication devices 105, 110, 115, 120 and/or another system (e.g., a third-party system) to manage, retrieve, modify, add, or delete, the information stored in data store 164.

Network device 160 may provide users of the system 100 the ability to communicate and interact with other users. In particular examples, network device 160 may provide users with the ability to take actions on various types of items or objects, supported by network device 160. In particular examples, network device 160 may be capable of linking a variety of entities. As an example and not by way of limitation, network device 160 may enable users to interact with each other as well as receive content from other systems (e.g., third-party systems) or other entities, or to allow users to interact with these entities through an application programming interfaces (API) or other communication channels.

It should be pointed out that although FIG. 1 shows one network device 160 and four communication devices 105, 110, 115 and 120, any suitable number of network devices 160 and communication devices 105, 110, 115 and 120 may be part of the system of FIG. 1 without departing from the scope of the present disclosure.

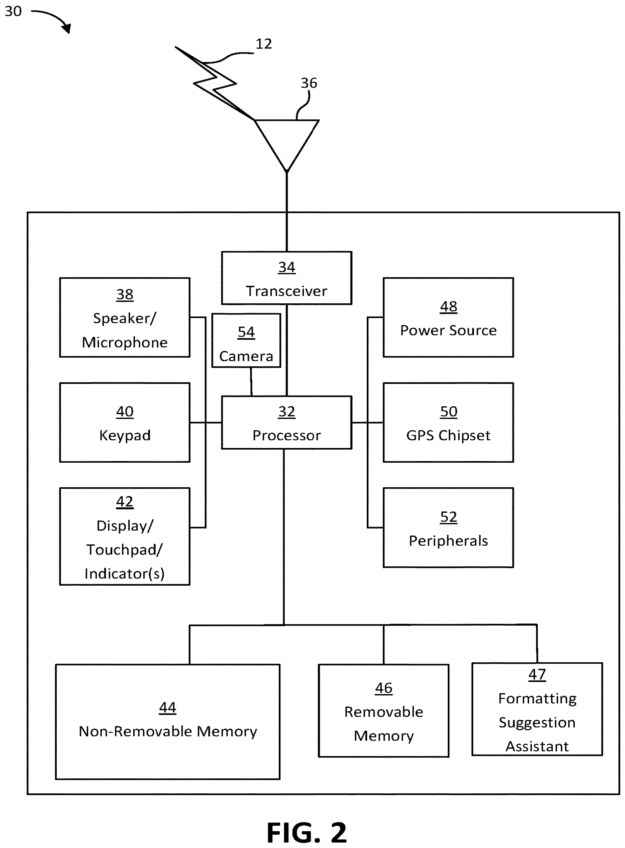

FIG. 2 illustrates a block diagram of an exemplary hardware/software architecture of a communication device such as, for example, user equipment (UE) 30. In some exemplary aspects, the UE 30 may be any of communication devices 105, 110, 115, 120. In some exemplary aspects, the UE 30 may be a computer system such as for example a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, smart watch, charging case, or any other suitable electronic device. As shown in FIG. 2, the UE 30 (also referred to herein as node 30) may include a processor 32, non-removable memory 44, removable memory 46, a speaker/microphone 38, a keypad 40, a display, touchpad, and/or indicators 42, a power source 48, a global positioning system (GPS) chipset 50, and other peripherals 52. The power source 48 may be capable of receiving electric power for supplying electric power to the UE 30. For example, the power source 48 may include an alternating current to direct current (AC-to-DC) converter allowing the power source 48 to be connected/plugged to an AC electrical receptable and/or Universal Serial Bus (USB) port for receiving electric power. The UE 30 may also include a camera 54. In an example, the camera 54 may be a smart camera configured to sense images/video appearing within one or more bounding boxes. The UE 30 may also include communication circuitry, such as a transceiver 34 and a transmit/receive element 36. It will be appreciated the UE 30 may include any subcombination of the foregoing elements while remaining consistent with an example.

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., non-removable memory 44 and/or removable memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

The processor 32 is coupled to its communication circuitry (e.g., transceiver 34 and transmit/receive element 36). The processor 32, through the execution of computer executable instructions, may control the communication circuitry in order to cause the node 30 to communicate with other nodes via the network to which it is connected.

The transmit/receive element 36 may be configured to transmit signals to, or receive signals from, other nodes or networking equipment. For example, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another example, the transmit/receive element 36 may be configured to transmit and/or receive both RF and light signals. It will be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multi-mode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, (e.g., non-removable memory 44 and/or removable memory 46) as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other examples, the processor 32 may access information from, and store data in, memory that is not physically located on the node 30, such as on a server or a home computer.

The processor 32 may receive power from the power source 48, and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 32 may also be coupled to the GPS chipset 50, which may be configured to provide location information (e.g., longitude and latitude) regarding the current location of the node 30. It will be appreciated that the node 30 may acquire location information by way of any suitable location-determination method while remaining consistent with an example.

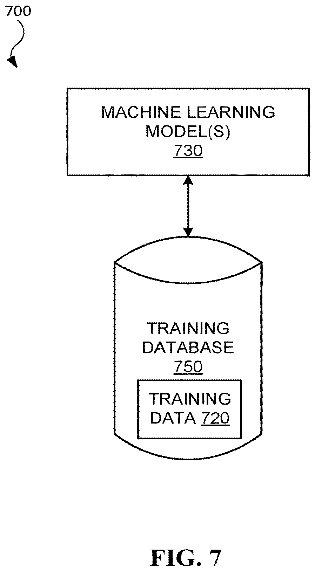

The UE 30 may also include a formatting suggestion assistant 47 that may auto suggest suitable content formats for one or more items of content input to, or captured by, a composer, as described more fully herein. In some examples, the formatting suggestion assistant 47 may implement a machine learning formatting model (e.g., machine learning model(s) 730 of FIG. 7) that may be pre-trained, and/or trained in real-time, with training data (e.g., training data 720 of FIG. 7) to determine the auto suggested suitable content formats associated with the one or more items of content, as described more fully below.

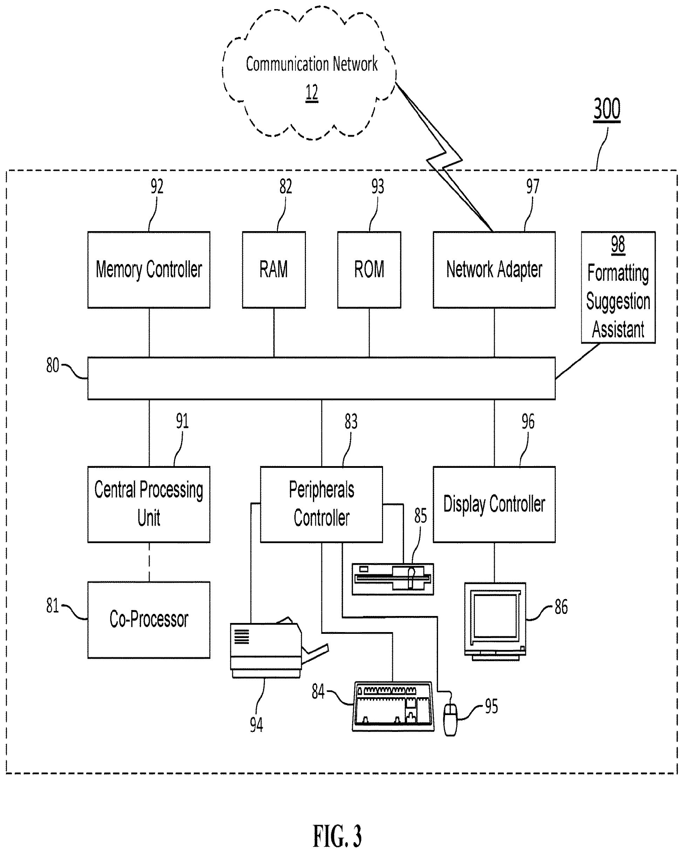

FIG. 3 is a block diagram of an exemplary computing system 300. In some examples, the network device 160 may be a computing system 300. The computing system 300 may comprise a computer or server and may be controlled primarily by computer readable instructions, which may be in the form of software, wherever, or by whatever means such software is stored or accessed. Such computer readable instructions may be executed within a processor, such as central processing unit (CPU) 91, to cause computing system 300 to operate. In many workstations, servers, and personal computers, central processing unit 91 may be implemented by a single-chip CPU called a microprocessor. In other machines, the central processing unit 91 may comprise multiple processors. Coprocessor 81 may be an optional processor, distinct from main CPU 91, that performs additional functions or assists CPU 91.

In operation, CPU 91 fetches, decodes, and executes instructions, and transfers information to and from other resources via the computer's main data-transfer path, system bus 80. Such a system bus connects the components in computing system 300 and defines the medium for data exchange. System bus 80 typically includes data lines for sending data, address lines for sending addresses, and control lines for sending interrupts and for operating the system bus. An example of such a system bus 80 is the Peripheral Component Interconnect (PCI) bus. In an exemplary aspect, the computing system 300 may include a formatting suggestion assistant 98 that may auto suggest suitable content formats for one or more items of content input to, or captured by, a composer, as described more fully herein. In some examples, the formatting suggestion assistant 98 may implement a machine learning formatting model (e.g., machine learning model(s) 730 of FIG. 7) that may be pre-trained, and/or trained in real-time, with training data (e.g., training data 720 of FIG. 7) to facilitate determination of the auto suggested suitable content formats associated with the one or more items of content, as described more fully below. In some examples, the formatting suggestion assistant 98 may determine one or more format content suggestions in response to determining or receiving content input, by or associated with a user, via a composer or editor tool/device associated with a user interface (e.g., display/touchpad/indicator(s) 42) of a communication device (e.g., UE 30). For instance, in some examples, the formatting suggestion assistant 47 may provide the content input to (or captured by) the composer or editor tool/device, by or associated with a user, to the formatting suggestion assistant 98 of the computer system 300. The formatting suggestion assistant 98 may automatically determine one or more suggested content formats associated with the content input to, or captured by, the composer or editor tool/device. The formatting suggestion assistant 98 may provide the determined one or more suggested formats of the content items to the communication device (e.g., UE 30) to be presented via the display/touchpad/indicator(s) 42.

Memories coupled to system bus 80 include RAM 82 and ROM 93. Such memories may include circuitry that allows information to be stored and retrieved. ROMs 93 generally contain stored data that cannot easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 300 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 300. Such visual output may include text, graphics, animated graphics, and video. Display 86 may be implemented with a cathode-ray tube (CRT)-based video display, a liquid-crystal display (LCD)-based flat-panel display, gas plasma-based flat-panel display, or a touch-panel. Display controller 96 includes electronic components required to generate a video signal that is sent to display 86.

Further, computing system 300 may contain communication circuitry, such as for example a network adaptor 97, that may be used to connect computing system 300 to an external communications network, such as network 12 of FIG. 2, to enable the computing system 300 to communicate with other nodes (e.g., UE 30) of the network.

With some existing composers, a user may need to manually adjust the format of content while creating content of a post, which may be time consuming and cumbersome to users and may undesirably impact creative content being written/typed and posted by an app. This may discourage creators/users to create good formatted content.

Furthermore, many mobile devices typically may have limited input window sizes, which may cause typing or inputting of content to a composer within these limited window sizes to be difficult to users and this may discourage users to write or input rich and informative content within the composer.

Additionally, even existing composers that may have editing tools to edit content may be inefficient as to time and cost and may only be slightly or marginal user friendly. For instance, these editing tools of existing composers may still require a user to spend too much time to adjust the format of content carefully to make the usage of the editing tools worthwhile.

Some examples of the present disclosure may provide composers and/or composer tools that may overcome these aforementioned drawbacks and may help users to focus on content innovation/creation by providing composers to automatically suggest formats of content being created by users, which may enhance the experience of content creation by the users.

By utilizing the composers of the present disclosure, users may be able to focus more on the typing/writing, or other input (e.g., spoken input), of content in a composer to express their views, ideas and/or information, and the users may not need to explicitly modify or adjust items of the content, within a composer, into one or more different formats.

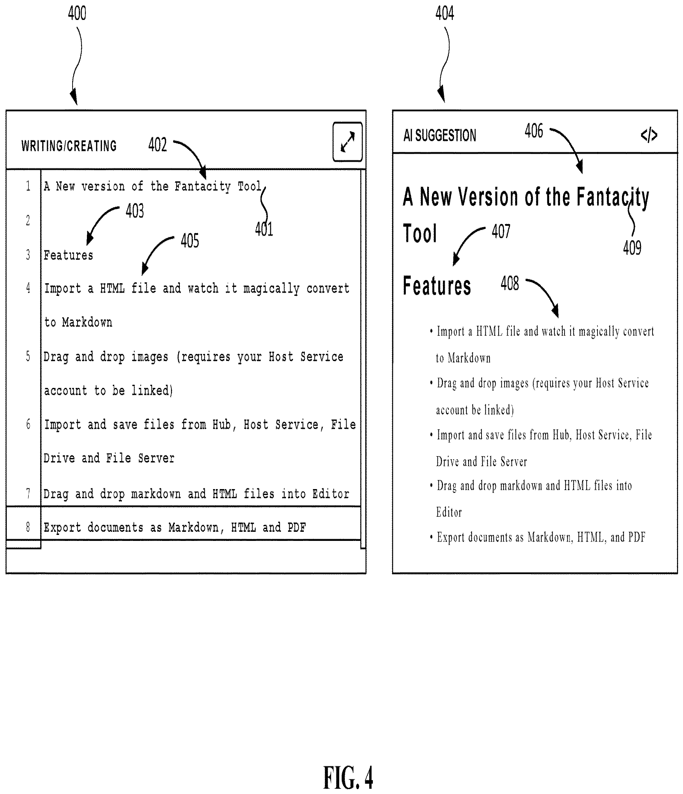

Referring now to FIG. 4, a diagram illustrating a recommended or suggested format of content based on the same/similar content input by or associated with a user within a composer or editor tool is provided. In the example of FIG. 4, a user may type, write or otherwise input (e.g., spoken input) one or more items of content 402 within a composer 400 (also referred to herein as editor 400) of a communication device (e.g., UE 30). In some examples of the present disclosure, a microphone (e.g., speaker/microphone 38) of a communication device may be associated with the composer 400 and the microphone may detect speech (e.g., voice data) of the user and may translate the user's speech to text and input the text within the composer 400.

As shown in FIG. 4, the one or more items of content 402 input, by or associated with a user, within the composer 400 includes an element 401 as a header or title such as, for example, "A New Version of the Fantacity Tool" associated with line 1 and indicates Features 403 associated with line 3 and multiple examples 405 of such Features 403 associated with lines 4, 5, 6, 7, 8 of the composer 400. In this example, the formatting suggestion assistant 404 (e.g., formatting suggestion assistant 47, formatting suggestion assistant 98) may analyze the one or more items of content 402 input to the composer 400 and may implement a machine learning formatting model (e.g., machine learning model(s) 730 of FIG. 7) that may be pre-trained, and/or trained in real-time, with training data/content (e.g., training data 720 of FIG. 7) as described more fully below. By implementing the machine learning formatting model, the formatting suggestion assistant 404 may automatically determine one or more suggested formats of content 406 that are associated with the same one or more items of content 402 input to the composer 400, by or associated with the user. In this regard, the formatting suggestion assistant 404 may present the one or more suggested formats of content 406 via a user interface and/or a display (e.g., display/touchpad/indicator(s) 42) of a communication device (e.g., UE 30) for viewing by the user. In some aspects of the present disclosure, the formatting suggestion assistant 404 may be referred to herein as artificial intelligence (Al) suggestion 404.

In the example of FIG. 4, the formatting suggestion assistant 404 may analyze the one or more items of content 402 input within, or captured by, the composer 400 and automatically (i.e., without user input or interaction) suggest the title or header 409 "A New Version of the Fantacity Tool", in the suggested formats of content 406, in a different format as the same title or header (e.g., element 401) in the one or more items of content 402. Additionally, for example, the formatting suggestion assistant 404 may automatically suggest the Features 407 in the suggested formats of content 406, associated with the Features 403 at line 3 of the composer 400, in a larger font and in a bold font in the suggested formats of content 406 and may create the examples of the Features 403 associated with lines 4, 5, 6, 7, 8 in the composer 400 in a bullet list 408 and may indicate the items of the bullet list 408, in the suggested formats of content 406, in a different font size and different font style in relation to the examples 405 of the Features 403 corresponding one or more items of content 402 at the lines 4, 5, 6, 7, 8 of the composer 400.

In some examples, the formatting suggestion assistant 404 may present via the user interface and/or display (e.g., display/touchpad/indicator(s) 42) the suggested formats of content 406 in real-time (e.g., as a preview), for example, as the one or more items of content 402 are being input in real-time to the composer 400. In other examples, the formatting suggestion assistant 404 may present (e.g., as a preview) the suggested formats of content 406 via the user interface and/or display (e.g., display/touchpad/indicator(s) 42) after/in response to the input of the one or more items of content 402 being completely input to, or captured by, the composer 400.

In some examples of the present disclosure, the formatting suggestion assistant 404 may present one or more options (e.g., via icons, buttons, etc.) when presenting the suggested formats of content 406 via the user interface and/or a display (e.g., display/touchpad/indicator(s) 42) of the communication device (e.g., UE 30) to enable a user to select an option(s) to either accept the suggested formats of content 406 or to request the formatting suggestion assistant 404 to generate and present another (e.g., alternative) suggested formats of content corresponding to the same or similar one or more items of content 402 input to, or captured by, the composer 400.

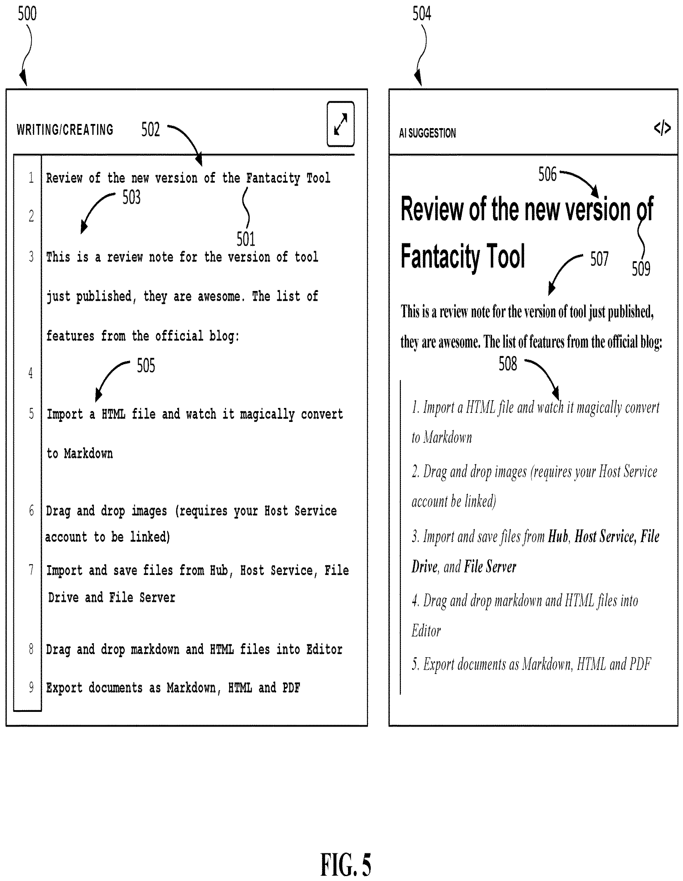

In some other examples, in lieu of the formatting suggestion assistant 404 awaiting receipt of a selection by a user to accept the suggested formats of content 406 or awaiting selection of a request by the user to generate and present another suggested formats of content corresponding to the same or similar one or more items of content 402, the formatting suggestion assistant 404 may automatically present another/alternate suggested formats of content (e.g., suggested formats of content 506 of FIG. 5) in response to the expiration of a predetermined time period (e.g., expiration of a 10 seconds time period, 15 seconds time period, 20 seconds time period, etc.). The automatically presented alternate suggested formats of content may correspond to the same or similar one or more items of content 402 input to, or captured by, the composer 400.

Referring now to FIG. 5, a diagram illustrating another recommended or suggested format of content based on the same/similar content input by or associated with a user within a composer or editor tool is provided. In the example of FIG. 5, input of one or more items of content 502 may be input and/or captured by composer 500 (an example of composer 400). The input may be written and/or typed in the composer 500 by a user. The input may be original input associated with, or input by, the user to the composer 500. In some other examples, the input captured by the composer 500 may be associated with text translated from speech (e.g., voice/audio data) of the user captured by a microphone (e.g., speaker/microphone 38) in a similar manner as described above.

The one or more items of content 502 may denote a title or header associated with element 501 indicating "Review of the new version of Fantacity Tool" at line 1 of the composer 500. Additionally, the composer 500 may include input of one or more items of content 502 indicating at element 503 "This is a review note for the version of tool just published, they are awesome. The list of features from the official blog:" associated with line 3 of the composer 500. Further, the composer 500 may indicate input of the one or more items of content 502 indicating the list of features from the official blog 505 associated with lines 5, 6, 7, 8 and 9 of the composer 500.

In the example of FIG. 5, the formatting suggestion assistant 504 (an example of formatting suggestion assistant 404) may analyze the one or more items of content 502 and may automatically generate suggested formats of content 506. In some examples, the formatting suggestion assistant 504 may implement/execute a machine learning formatting model (e.g., machine learning model(s) 730) to determine the suggested formats of content 506.

As shown in FIG. 5, the formatting suggestion assistant 504 may generate the element 509 corresponding to the title or header associated with element 501 indicating "Review of the new version of Fantacity Tool" at line 1 of the composer 500 in a larger font and/or a different font style in relation to element 501.

Additionally, the formatting suggestion assistant 504 may indicate or denote the element 507 in the suggested format of content 506 associated with element 503 of the one or more items of content 502 indicating "This is a review note for the version of tool just published, they are awesome. The list of features from the official blog:" in a different font style and/or a smaller font in relation to element 503 of the one or more items of content 502 of the composer 500 as shown in FIG. 5.

Furthermore, the formatting suggestion assistant 504 may indicate or denote the list of features from the official blog 508 in a formatted numbered list (e.g., an ordered list numbered 1, 2, 3, 4, 5) and in a different font and/or different font style (e.g., italics) in relation to the corresponding list of features from the official blog 505 of the one or more items of content 502 of the composer 500. In the example of FIG. 5, the formatting suggestion assistant 504 may determine that one or more terms have more weight, emphasis or importance relative to other terms of the list of features from the official blog 508 and may bold these terms in the list of features from the official blog 508 as shown in FIG. 5. In the example of FIG. 5, the font of the list of features from the official blog 508 may be formatted italicized by the formatting suggestion assistant, unlike the corresponding list of features from the official blog 505 of the one or more items of content 502 of the composer 500.

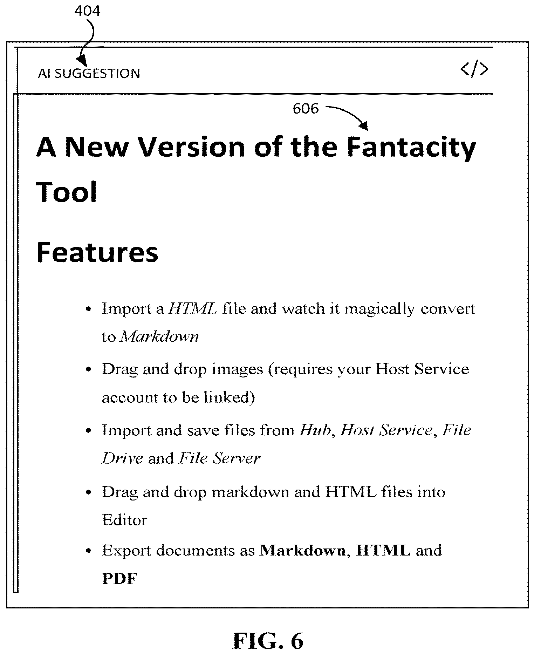

Referring now to FIG. 6, a diagram illustrating another, or alternate recommended or suggested format of content based on the same/similar content input by or associated with a user within a composer or editor tool is provided. In the example of FIG. 6, the formatting suggestion assistant 404 may generate another/alternative suggested formats of content 606 based in part on a prior presented suggested formats of content (e.g., suggested formats of content 406 of FIG. 4) associated with the corresponding one or more items of content 402. In some examples, the formatting suggestion assistant 404 may generate and present the alternative suggested formats of content 606 in response to a user selecting an option requesting the formatting suggestion assistant 404 to generate and present another suggested formats of content corresponding to the same or similar one or more items of content 402. In some other examples, the formatting suggestion assistant 404 may automatically generate and present the alternate suggested formats of content 606, corresponding to the same or similar one or more items of content 402, in response to determination of an expiration of a predetermined time period (e.g., expiration of a 10 seconds time period, 15 seconds time period, 20 seconds time period, etc.).

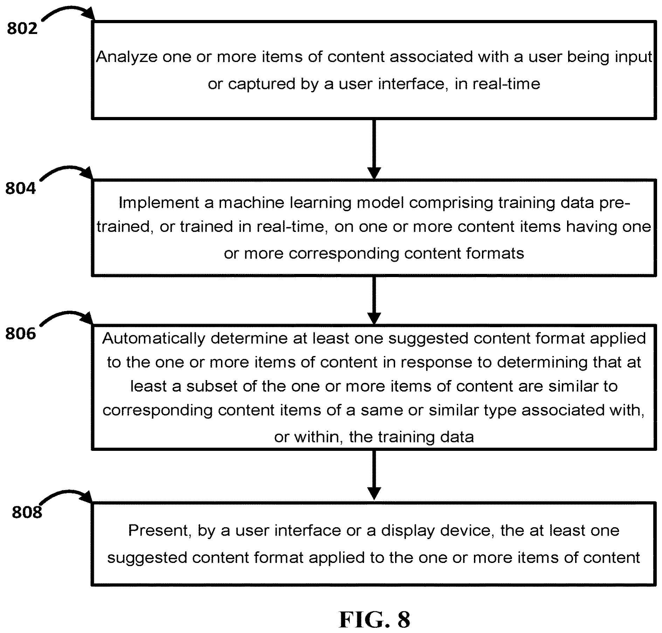

FIG. 7 illustrates an example of a machine learning framework 700 including machine learning model(s) 730 and a training database 750, in accordance with one or more examples of the present disclosure. The training database 750 may store training data 720. In some examples, the machine learning framework 700 may be hosted locally in a computing device or hosted remotely. By utilizing the training data 720 of the training database 750, the machine learning framework 700 may train the machine learning model(s) 730 to perform one or more functions, described herein, of the machine learning model(s) 730. In some examples, the machine learning model(s) 730 may be stored in a computing device. For example, the machine learning model(s) 730 may be embodied within a communication device (e.g., UE 30). In some other examples, the machine learning model(s) 730 may be embodied within another device (e.g., computing system 300). Additionally, the machine learning model(s) 730 may be processed by one or more processors (e.g., processor 32 of FIG. 2, coprocessor 81 of FIG. 3). In some examples, the machine learning model(s) 730 may be associated with operations (or performing operations) of FIG. 8. In some other examples, the machine learning model(s) 730 may be associated with other operations.

In an example, the training data 720 may include attributes of thousands of objects. For example, the objects may be posters, brochures, billboards, menus, goods (e.g., packaged goods), books, groceries, Quick Response (QR) codes, smart home devices, home and outdoor items, household objects (e.g., furniture, kitchen appliances, etc.) and any other suitable objects. In some other examples, the objects may be smart devices (e.g., UEs 30, communication devices 105, 110, 115, 120), persons (e.g., users), newspapers, articles, flyers, pamphlets, signs, cars, content items (e.g., messages, notifications, images, videos, audio), and/or the like. Attributes may include, but are not limited to, the size, shape, orientation, position/location of the object(s), etc. The training data 720 employed by the machine learning model(s) 730 may be fixed or updated periodically. Alternatively, the training data 720 may be updated in real-time based upon the evaluations performed by the machine learning model(s) 730 in a non-training mode. This may be illustrated by the double-sided arrow connecting the machine learning model(s) 730 and stored training data 720. Some other examples of the training data 720 may include, but are not limited to, items of content determined as being associated with a network (e.g., the Internet). The items of content may be analyzed to determine one or more associated formats of the items of content. These formatted items of content may be provided as the training data 720 to the training database 750 and may be utilized to pre-train, and/or train in real-time, the machine learning model(s) 730. In this regard, in an instance in which the machine learning model(s) 730 may detect content items of a similar type as one or more items of content (e.g., the one or more items of content 402, the one or more items of content 502) being analyzed the machine learning model(s) 730 may automatically determine a suggested content format for the detected content items. In this regard, in some examples of the present disclosure, the machine learning model(s) 730 may facilitate output/presentation (e.g., via a user interface, a display, etc.) of the suggested content format for the detected content items.

In some examples of the present disclosure, the machine learning model(s) 730 may analyze the training data 720 and in instances in which content items of the training data 720 such as, for example, particular items of text (or other multimedia content) have or are associated with an indicated emphasis and/or importance, the machine learning model(s) 730 may apply the emphasis and/or importance to the same or similar text or multimedia content (e.g., or type of text, or type of multimedia content) in response to analyzing and detecting such corresponding same/similar text or multimedia content (e.g., when analyzing the same or similar text input to or captured by a composer (e.g., composer 400)). Some examples of emphasis and/or importance may include but, are not limited to, one or more fonts in different styles (e.g., Times New Roman Arial, Calibri, Verdana, etc.), fonts in different weights (e.g., different bold fonts, italics, etc.), content items such as, for example, text items in lists (e.g., bullet lists, numbered/ordered lists, etc.). In some examples, the training data 720 may be synthetic data, and/or content associated with a network (e.g., the Internet), as described above, such as for example content based on one or more web pages, and/or content based on attributes (e.g., posters, etc.) as described above. The machine learning framework 700 may take raw text, other content or media (e.g., multimedia content such as for example videos, pictures, etc.) as the input for the machine learning model(s) 730, and a rendering visualization of the raw text, other content or media may be generated by the machine learning framework 700 as results (e.g., one or more labels) for/associated with the training data 720. The machine learning model(s) 730 may be able to learn from the training data 720 (e.g., the input raw text, content, media) to predict or determine the output (e.g., a format(s) of suggested content items) to render as one or more results.

In some examples, the synthetic data may, but need not, be modified/changed to certain content that may be marked based on a tag/format or the like from data associated with for example a user(s) that may have edited or created this data to enable the machine learning framework 700 to form/generate new data examples. In this manner, the machine learning framework 700 may have diversity and may include many more datasets for the training data 720.

By utilizing the example aspects of the present disclosure providing artificial intelligence and/or machine learning approaches to automatically generate suggestions for formatting of content items may provide a more robust, efficient and user friendly composer (e.g., editor) for users to engage with for user interaction and provision/sharing of content than conventional/existing approaches that may require brute force approaches such as causing a user to manually adjust the format of content within a composer. The composer (e.g., editor) of the example aspects of the present disclosure may provide technical improvements for the field of user interface interaction technology (e.g., graphical user interfaces) as well as improvements for communication devices. For example, such technical improvements for the field of user interface interaction technology and improvements for communication devices may be by enhancing and improving efficient operation of communication devices based on minimizing/conserving memory space of memory devices and processing resources of communication devices associated with presentation/rendering of a user interface with automatic generated formatted content based on data associated with a user that may be input or captured by a composer, such as a user interface.

For example, automated format content suggestions based on the example aspects of the present disclosure may reduce the time and/or processing resources to generate formatted content within a composer to share such formatted content with communication devices of other users since such automated formatted content suggestions may reduce/minimize conservation of computing resources (e.g., processing resources (e.g., processor 32, co-processor 81)) of a communication device in relation to conventional/existing brute force manual approaches of content format adjustment within a composer. These conventional/existing brute force manual approaches of content format adjustment within a composer may require significantly more computation of computing resources (than the example aspects of the present disclosure) in order to perform the manual inputs/approaches by a user associated with the content format adjustment. Additionally, the example aspects of the present disclosure may conserve memory space of memory devices (e.g., non-removable memory 44, removable memory 46, RAM 82, ROM 93) by not causing additional storage of inputs by memory devices associated with data pertaining to steps (e.g., manual format adjustment based selections) taking place to enable the user to manually adjust a format of their input content within a composer. In this regard, the artificial intelligence and/or machine learning techniques of automatically generating format content suggestions by the example aspects of the present disclosure may provide technical improvements over conventional/existing brute force manual approaches of content format adjustment within a composer.

Additionally, although some of the example aspects of the present disclosure described in relation to FIGS. 4, 5 and 6 may be described in relation to a communication device such as, for example, a UE 30, the exemplary aspects of the present disclosure described herein may be performed by another communication device such as, for example, computing system 300 or any other suitable communication device.

FIG. 8 illustrates an example flowchart illustrating operations for providing recommended or suggested format(s) of content according to an example of the present disclosure. At operation 802, a device (e.g., UE 30, computing system 300) may analyze one or more items of content (e.g., one or more items of content 402) associated with a user being input or captured by a user interface. In some examples, the user interface may be associated with and/or include a composer entity (e.g., composer 400, composer 500) or editor tool/device (also referred to herein as editor entity) configured to receive or capture the input. The composer entity or the editor entity may be associated with at least one application. In some examples, the at least one application may, but need not, be associated with a social network (e.g., a social media network). In other examples, the at least one application may, but need not, be associated with any suitable network. In some examples, the one or more items of content associated with the user being input or captured may include text including alphabetic characters and/or numeric characters. In some other examples, the one or more items of content associated with the user being input or captured may be one or more items of multimedia content (e.g., photos, videos, documents, multimedia files, any other media types that the composer entity or editor entity may support). The device, by implementing the machine learning model, may auto provide a suggested format content that may be auto applied to the one or more items of multimedia content.

At operation 804, a device (e.g., UE 30, computing system 300) may implement a machine learning model including training data pre-trained, and/or trained in real-time, on one or more content items having one or more corresponding content formats. In some examples, the machine learning model may be an example of a machine learning formatting model (e.g., machine learning model(s) 730) and the training data may be an example of training data 720.

At operation 806, a device (e.g., UE 30, computing system 300) may automatically determine at least one suggested content format applied to the one or more items of content in response to determining that at least a subset of the one or more items of content are similar to corresponding content items of a same or similar type associated with, or within, the training data (e.g., training data 720). In some examples, the at least one suggested content format may be examples of the one or more suggested formats of content 406 and/or the suggested format of content 506. The one or more items of content, in which the at least one suggested content format may be applied, may be examples of the one or more items of content 402 and/or the one or more items of content 502.

At operation 808, a device (e.g., UE 30, computing system 300) may present, by a user interface or a display device, the at least one suggested content format applied to the one or more items of content. In some examples, the user interface or the display device may be a display/touchpad/indicator(s) 42 or a display 86.

In some examples, the device (e.g., UE 30, computing system 300) may automatically determine, by implementing the machine learning model, at least one alternate suggested content format applied to the one or more items of content in response to determining an expiration of a predetermined time period. In some other examples, the device (e.g., UE 30, computing system 300) may determine, by implementing the machine learning model, at least one alternate suggested content format applied to the one or more items of content in response to detecting an indication of a selection of an option associated with generating the alternate suggested content format. The device may automatically present, by the user interface or the display device, the alternate suggested content format applied to the one or more items of content in response to the determining of the at least one alternate suggested content format.

In some examples, one or more items of content of the alternate suggested content format may be in a different content format in relation one or more items of content of the at least one suggested content format. The one or items of content of the alternate suggested content format (e.g., the one or more suggested formats of content 606) and the one more items of content of the at least one suggested content format (e.g., the one or more suggested formats of content 406) may be applied to (the same or similar) one or more items of content (e.g., the one or more items of content 402) associated with the user being input or captured (e.g., by the composer).

The foregoing description of the examples has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as components, without loss of generality. The described operations and their associated components may be embodied in software, firmware, hardware, or any combinations thereof.

Any of the steps, operations, or processes described herein may be performed or implemented with one or more hardware or software components, alone or in combination with other devices. In one example, a software component is implemented with a computer program product comprising a computer-readable medium containing computer program code, which can be executed by a computer processor for performing any or all of the steps, operations, or processes described.

Embodiments also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments also may relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method comprising:
analyzing one or more items of content associated with a user being input or captured by a user interface;
implementing a machine learning model comprising training data pre-trained, or trained in real-time, on one or more content items comprising one or more content formats;
automatically determining at least one suggested content format applied to the one or more items of content in response to determining that at least a subset of the one or more items of content are similar to corresponding content items of a same or similar type associated with, or within, the training data; and
presenting, by a user interface or a display device, the at least one suggested content format applied to the one or more items of content.

2. The method of claim 1, further comprising:
automatically determining, by the implementing the machine learning model, at least one alternate suggested content format applied to the one or more items of content in response to determining an expiration of a predetermined time period.

3. The method of claim 1 or 2, further comprising:
determining, by the implementing the machine learning model, at least one alternate suggested content format applied to the one or more items of content in response to detecting an indication of a selection of an option associated with generating the alternate suggested content format.

4. The method of claim 3, further comprising:
automatically presenting, by the user interface or the display device, the alternate suggested content format applied to the one or more items of content in response to the determining the at least one alternate suggested content format.

5. The method of claim 3 or 4, wherein:
one or more items of content of the alternate suggested content format are in a different content format in relation one or more items of content of the at least one suggested content; and
the one or items of content of the alternate suggested content format and the one more items of content of the at least one suggested content format are applied to the one or more items of content associated with the user being input or captured.

6. The method of any preceding claim, wherein the one or more items of content associated with the user being input or captured comprises text comprising alphabetic characters and/or numeric characters.

7. The method of any preceding claim, wherein:
the user interface is associated with at least one composer entity or editor entity configured to receive or capture the input; and
the composer entity or the editor entity is associated with at least one application.

8. The method of any preceding claim, further comprising:
performing the presenting of the at least one suggested content format applied to the one or more items of content in real-time while the input is being received or captured by the user interface.

9. The method of any preceding claim, further comprising:
performing the presenting of the at least one suggested content format applied to the one or more items of content in response to, or after, determination of completion of the input received or captured by the user interface.

10. An apparatus comprising:
one or more processors; and
at least one memory storing instructions, that when executed by the one or more processors, cause the apparatus to carry out the method of any preceding claim.

11. A computer-readable medium storing instructions that, when executed by a processor, cause the processor to carry out the method of any of claims 1 to 9.

12. A computer program product comprising instructions which, when the program is executed by a computer, cause the computer to carry out the method of any of claims 1 to 9.
